# FASCICULE DE BREVET EUROPEEN

(11) **EP 0 633 151 B1**
(45) Date de publication et mention de la délivrance du brevet: **03.09.1997**
(21) Numéro de dépôt: 94401410.9
(22) Date de dépôt: 23.06.1994
(51) Int. Cl.: B60B 33/02, B60B 33/00

(54) **Roulette pour chariot susceptible d'être immobilisé sur un trottoir roulant**
Wagenlaufrolle die auf einem Fahrsteig immobilisiert werden kann
Castor for cart which can be immobilised on a moving pavement

(30) Priorité: 05.07.1993 FR 9308193
(43) Date de publication de la demande: 11.01.1995
(73) Titulaire: ATELIERS REUNIS CADDIE S.A., F-67301 Schiltigheim Cédex (FR)
(72) Inventeur: Joseph, Alice, F-67300 Schiltigheim (FR); Schlienger, Michel, F-67400 Illkirch-Graffenstaden (FR)
(74) Mandataire: CABINET BONNET-THIRION

(56) Documents cités:
- EP-A- 0 373 398
- FR-A- 2 123 980
- GB-A- 2 119 042
- GB-A- 2 147 377

## Description

La présente invention concerne une roulette pour chariot susceptible d'être immobilisé sur un trottoir roulant et plus particulièrement sur un trottoir garni d'un tapis à surface rainurée.

La roulette est du tue comportant deux flasques libres en rotation autour d'un axe porté par les ailes d'une chape fixe ou pivotante, l'écartement entre les flasques à leur périphérie correspondant à l'écartement qui est en général normalisé entre les rainures du tapis, de sorte que lorsque la roulette arrive sur le tapis, les deux flasques s'engagent dans les rainures. Un dispositif de freinage se trouve alors au contact des nervures du tapis et immobilise le chariot sur ce tapis.

Comme dispositif de freinage, il a été proposé un patin de frein fixé sur la chape en porte-à-faux à l'extérieur de la roulette.

Comme autre solution, il a été proposé de disposer un patin de frein en retrait entre les deux flasques, monté sur le même axe de rotation, celui-ci étant de section carrée pour empêcher la rotation du patin.

Cette dernière construction est avantageuse par rapport à la première car on évite les problèmes de détérioration des dispositifs de freinage extérieurs. Elle présente cependant des inconvénients : l'axe de rotation des flasques doit supporter la totalité des contraintes de freinage, par ailleurs la fabrication de cet axe avec une zone de section carrée est coûteuse.

Pour éviter cela, on a proposé, par exemple dans le document GB-A-2 147 377, une roulette pour chariot susceptible d'être immobilisé sur un trottoir incliné garni d'une surface rainurée, comportant une chape ayant deux ailes supportant un axe de rotation autour duquel sont montés deux flasques qui sont libres en rotation et distants l'un de l'autre de manière à pouvoir s'engager dans les rainures de ladite surface et un moyen de freinage disposé en retrait entre les deux flasques et autorisant leur rotation, ledit moyen de freinage étant apte à venir au contact des nervures de ladite surface lorsque les deux flasques sont engagés dans les rainures de celle-ci, et constitué par un organe intermédiaire monté libre en rotation autour dudit axe et comportant un embout apte à venir buter contre un élément fixe du chariot.

Cette conception permet de supprimer tout effort de torsion sur l'axe de la roulette au moment du freinage. En effet, l'organe intermédiaire, arrivant au contact des nervures de la surface rainurée est entraîné en rotation, car il est monté libre en rotation autour de l'axe, mais voit son débattement angulaire limité dès que son embout arrive en butée sur l'élément fixe du chariot. Les efforts au moment du freinage sont ainsi transmis directement au chariot.

Malheureusement, selon le document ci-dessus, l'organe intermédiaire est un anneau présentant des dents à sa périphérie, et est donc une pièce compliquée et onéreuse, et la chape est une pièce spécifique du fait du doigt de blocage qu'elle comporte nécessairement.

La présente invention a pour but de pallier à ces inconvénients, et pour un objet une roulette comportant une chape classique non modifiée, pouvant recevoir un organe roulant classique ou un organe roulant associé à un moyen de freinage.

Ainsi, selon l'invention, une roulette du type ci-dessus est caractérisée par le fait que, la chape définissant une cuvette ouverte vers le bas, ledit embout est logé dans ladite cuvette et est apte à venir buter contre elle pour bloquer la rotation de l'organe intermédiaire.

Suivant d'autres dispositions particulières, l'organe intermédiaire est constitué par un disque comportant une projection radiale formant l'embout.

La fabrication de la roulette selon l'invention est simplifiée ainsi que son assemblage, les deux flasques et la pièce intermédiaire étant montés librement et directement autour d'un même axe, qui peut être un bouton standard et cet axe étant monté lui-même sans dispositions particulières dans les ailes de la chape.

Par ailleurs, les ailes de la chape peuvent être allégées en tenant compte du fait qu'elles ne sont plus sollicitées lors de la transmission des efforts au freinage.

La présente invention sera mieux comprise et d'autres avantages ressortiront à la lumière de la description qui va suivre faite en référence au dessin annexé sur lequel :
- la figure 1 est une vue latérale d'une roulette avec un arrachement, l'un des flasques n'ayant pas été représenté pour mieux montrer l'élément intermédiaire assurant l'immobilisation du chariot ;
- la figure 2 est une vue en coupe selon la ligne II-II de la figure 1 ; et
- la figure 3 est une vue en coupe similaire à celle de la figure 2 illustrant une variante de réalisation.

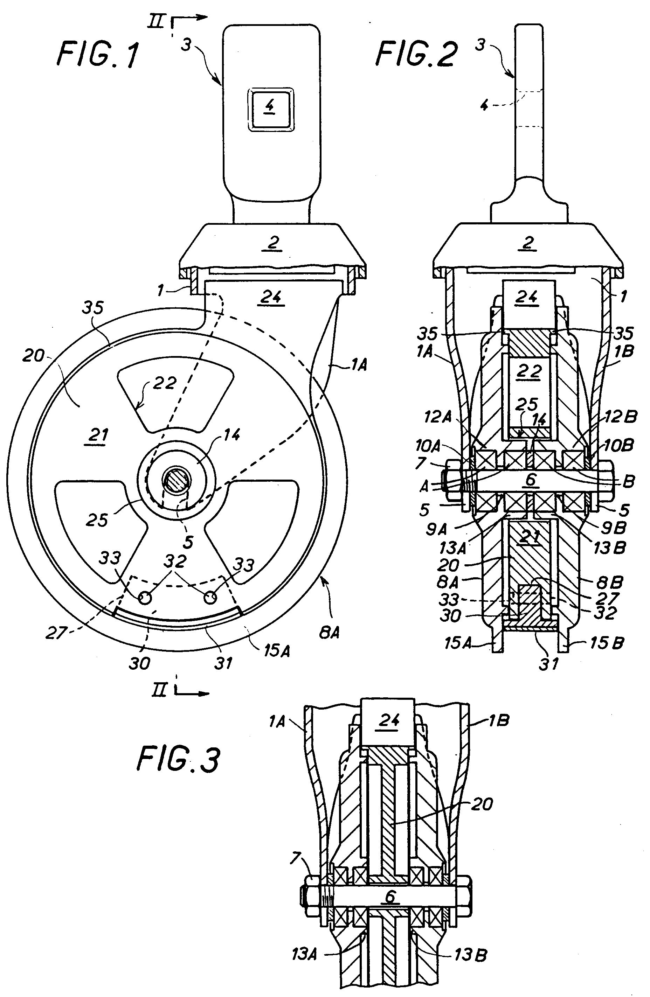

Selon l'exemple de réalisation choisi et représenté sur les figures 1 et 2, la roulette comprend une chape formant une cuvette 1 ouverte vers le bas avec deux ailes latérales 1A et 1B. La chape est montée sous une coupelle pivotante 2 supportant une patte 3 de fixation au chariot avec une lumière 4.

Les ailes 1A et 1B sont pourvues chacune d'une découpe 5 adaptée à recevoir la tige d'une vis 6 dont la partie lisse constitue l'axe de rotation de deux flasques identiques 8A et 8B. Ces flasques sont montés libres en rotation chacun sur une paire de roulements à billes A et B. Chaque flasque, comporte un passage axial respectivement 9A, 9B pour la vis 6. Sur leur face externe, les flasques comportent un renfoncement circulaire respectivement 12A, 12B pour un premier roulement à billes et sur leur face interne un fourreau circulaire respectivement 13A, 13B pour le second roulement à billes. Les deux flasques, lorsqu'ils sont en position, comme représenté sur la figure 2, se trouvent en regard l'un de l'autre avec une rondelle 14 disposée entre eux pour séparer les deux roulements internes. Un écrou 7 coopérant avec la partie terminale filetée de la vis 6 assure la fixation des flasques 8A, 8B sur les ailes 1A et 1B de la chape. Deux rondelles latérales 10A et 10B sont prévues pour bloquer également et protéger les roulements à billes.

Les flasques sont dimensionnés pour que leurs zones périphériques respectives 15A, 15B puissent s'engager dans les rainures du tapis.

Les flasques sont de manière classique réalisés par surmoulage d'un disque en matériau antidérapant, par exemple du polyuréthanne, avec un matériau destiné à donner à ce disque de la résistance, mais en laissant apparente la zone périphérique du disque, destinée à s'engager dans les rainures.

Pour assurer l'immobilisation de la roulette, lorsque ses flasques 8A et 8B sont enclenchés dans les rainures du tapis, il est prévu selon l'invention un organe intermédiaire 20, ici réalisé par moulage en un bloc. Celui-ci est constitué par un disque 21 allégé par des évidements 22 et traversé par un passage axial 25 qui permet de recevoir les fourreaux 13A et 13B des flasques et une projection radiale formant un embout 24 logé avec jeu dans la cuvette 1 de la chape.

Le débattement angulaire de l'organe intermédiaire 20 autour de l'axe de la roulette est ainsi limité par les parois intérieures de la cuvette 1.

On a prévu dans la zone du disque 21 qui vient au contact des nervures du tapis, un logement en creux 27 pour un patin 30 amovible avec une semelle 31 en matériau anti-dérapant réalisée par surmoulage. Le patin 30, est fixé à l'aide de goupilles 32 engagées dans des perçages 33. Comme représenté sur les figures, lorsqu'il est emboîté dans son logement le patin 30 a sa semelle 31 alignée circulairement avec la périphérie du disque 21.

Pour éviter que des saletés s'introduisent entre les flasques 8A,8B et l'organe intermédiaire 20, on a prévu un emboîtement de ces éléments. Les faces du disque 21 sont bordées par une saillie périphérique 35 adaptée à coopérer par emboîtement avec un profil complémentaire de la face interne des flasques 8A et 8B correspondants. Ceci permet également un autocentrage des flasques et facilite leur montage.

Les différents éléments constitutifs de la roulette sont assemblés de manière très simple. Les flasques 8A et 8B munis de leurs roulements à billes et de la rondelle de protection centrale 14 sont emboîtés de part et d'autre de l'organe intermédiaire. La vis 6 est introduite dans les passages axiaux 9A, 9B respectifs des flasques 8A,8B. On place ensuite l'embout 24 de l'organe intermédiaire 20 dans la cuvette 1 de la chape. La tige de la vis 6 est introduite dans la lumière 5 de chaque aile 1A et 1B et l'écrou 7 est serré.

En fonctionnement, lorsque la roulette arrive sur le tapis roulant à surface rainurée, les zones périphériques 15A, 15B des flasques s'engagent dans les rainures. Lorsque le patin 27 de l'organe intermédiaire 20 vient au contact des nervures du tapis, l'embout 24 de l'organe intermédiaire va venir buter sur les parois intérieures de la cuvette de la chape et immobiliser ainsi la roulette.

Sur la figure 3, on a représenté une variante de construction dans laquelle l'organe intermédiaire 20 est monté libre en rotation directement sur la partie lisse de la vis 6 et non pas sur l'extérieur des fourreaux 13A,13B des flasques comme précédemment.

On peut aussi prévoir un axe usiné avec des portées de diamètres différents pour recevoir les roulements à billes d'une part, et l'organe intermédiaire d'autre part.

D'autres variantes de réalisation peuvent être envisagées, notamment le patin de frein peut être constitué par une simple bande de revêtement antidérapant dans la zone de contact avec le sol, réalisée par surmoulage par exemple de polyuréthanne.

Par ailleurs, l'alignement circulaire de la surface active du patin de frein avec le reste de l'organe intermédiaire n'est pas obligatoire. Il est simplement recommandée pour des raisons de propreté.

Par ailleurs encore, la fixation de la roulette sur le chariot à l'aide d'une patte avec une lumière peut être remplacée par un tout autre moyen de fixation approprié.

## Revendications

1. Roulette pour chariot susceptible d'être immobilisé sur un trottoir incliné garni d'une surface rainurée, comportant une chape ayant deux ailes (1A, 1B) supportant un axe de rotation (6) autour duquel sont montés deux flasques (8A,8B) qui sont libres en rotation et distants l'un de l'autre de manière à pouvoir s'engager dans les rainures de ladite surface et un moyen de freinage (20) disposé en retrait entre les deux flasques (8A,8B) et autorisant leur rotation, ledit moyen de freinage (20) étant apte à venir au contact des nervures de ladite surface lorsque les deux flasques (8A,8B) sont engagés dans les rainures de celle-ci, et constitué par un organe intermédiaire (20) monté libre en rotation autour dudit axe (6) et comportant un embout (24) apte à venir buter contre un élément fixe du chariot, caractérisée par le fait que, la chape définissant une cuvette (1) ouverte vers le bas, ledit embout (24) est logé dans ladite cuvette (1) et est apte à venir buter contre elle pour bloquer la rotation de l'organe intermédiaire (20).

2. Roulette selon la revendication 1, caractérisée en ce que l'organe intermédiaire (20) est constitué par un disque (21) avec une projection radiale formant ledit embout (24).

3. Roulette selon l'une quelconque des revendications 1 ou 2, caractérisée en ce que ledit organe intermédiaire (20) comporte un logement (27) pour un patin (30) amovible avec une semelle (31) en matériau antidérapant.

4. Roulette selon l'une quelconque des revendications 1 ou 2, caractérisée en ce que l'organe intermédiaire comporte dans la zone de contact avec les nervures du tapis une bande de matériau antidérapant.

5. Roulette selon la revendication 4, caractérisée en ce que ladite bande est en polyuréthanne et elle est réalisée par surmoulage.

6. Roulette selon l'une quelconque des revendications précédentes, caractérisée en ce que chaque flasque présente un profil adapté à coopérer par emboîtement avec un profil complémentaire (35) dudit organe intermédiaire (20).

## Claims

1. A trolley wheel capable of being immobilised on an inclined pavement with a grooved surface, comprising a fork with two wings (1A, 1B) supporting a rotation shaft (6) about which are mounted two wheel disks (8A, 8B) which are free to rotate and spaced from each other in such a way as to be able to engage in the grooves in said surface and a braking means (20) set back between the two wheel disks (8A, 8B) and permitting their rotation, said braking means (20) being capable of coming into contact with the ribs of said surface when the two wheel disks (8A, 8B) are engaged in the grooves therein and consisting of an intermediate member (20) mounted so as to rotate freely about said shaft (6) and comprising an extension piece (24) capable of coming into a position of abutment against a fixed element of the trolley, characterized in that, since the fork defines a trough (1) open at the bottom, said extension piece (24) is housed in said trough (1) and is capable of coming into abutment thereagainst to block rotation of the intermediate member (20).

2. A wheel according to claim 1, characterized in that the intermediate member (20) consists of a disk (21) with a radial projection forming said extension piece (24).

3. A wheel according to either one of claims 1 or 2, characterized in that said intermediate member (20) comprises a receptacle (27) for a removable pad (30) with a sole piece (31) of non-skid material.

4. A wheel according to either one of claims 1 or 2, characterized in that the intermediate member comprises a strip of non-skid material in the area of contact with the ribs on the pavement.

5. A wheel according to claim 4, characterized in that said strip is of polyurethane and is moulded on.

6. A wheel according to any one of the preceding claims, characterized in that each wheel disk has a profile suited to interacting by interlocking with a complementary profile (35) of said intermediate member (20).

## Patentansprüche

1. Rolle für Wagen, welche auf einem geneigten Gehweg, der mit einer gerillten oder genuteten Oberfläche versehen ist, festgestellt oder immobilisiert werden kann und welche mit einer Kappe mit zwei Flügeln (1A,1B) versehen ist, die eine Drehachse (6) halten oder unterstützen, um welche zwei Scheiben (8A,8B) montiert sind, die frei drehbar sind und einen Abstand voneinander haben, um in die Rillen oder Nuten der Oberfläche eingreifen zu können, und welche ein Bremsmittel (20) aufweist, das zurückversetzt zwischen den beiden Scheiben (8A,8B) angeordnet ist und deren Drehung autorisiert, wobei das Bremsmittel (20) so angepaßt ist, daß es mit den Rippen der genannten Fläche in Kontakt kommt, wenn die beiden Scheiben (8A,8B) in die Rillen oder Nuten dieser Fläche eingreifen, und welches Bremsmittel durch ein Zwischenorgan (20) gebildet ist, das um die Achse (6) frei drehbar montiert ist und einen Ansatz (24) aufweist, der so angepaßt ist, daß er gegen ein festes Element des Wagens zur Anlage kommt, dadurch gekennzeichnet, daß die Kappe eine nach unten offene Schale (1) definiert, und daß der Ansatz (24) in der Schale (1) aufgenommen und so angepaßt ist, daß er gegen diese zur Anlage kommt, um die Drehung des Zwischenorgans (20) zu blockieren.

2. Rolle nach Anspruch 1, dadurch gekennzeichnet, daß das Zwischenorgan (20) durch eine Scheibe (21) mit einem radialen Vorsprung gebildet ist, welcher den Ansatz (24) bildet.

3. Rolle nach einem der Ansprüche 1 oder 2, dadurch gekennzeichnet, daß das Zwischenorgan (20) eine Ausnehmung oder Vertiefung (27) aufweist für einen abnehmbaren Schuh (30) mit einer Sohle (31) aus einem Antigleitmaterial.

4. Rolle nach einem der Ansprüche 1 oder 2, dadurch gekennzeichnet, daß das Zwischenorgan in der Zone des Kontakts mit den Rippen des Überzugs ein Band aus einem Antigleitmaterial aufweist.

5. Rolle nach Anspruch 4, dadurch gekennzeichnet, daß das Band aus Polyurethan besteht und durch Aufformen realisiert ist.

6. Rolle nach einem der voranstehenden Ansprüche, wobei jede Scheibe (8A,8B) ein Profil darbietet, das so angepaßt ist, daß es mit einem komplementären Profil (35) des Zwischenorgans (20) ineinandergreifend kooperiert.
